# EUROPEAN PATENT APPLICATION

(11) **EP 3 524 057 A1**
(43) Date of publication of application: **14.08.2019**
(21) Application number: 18156552.4
(22) Date of filing: 13.02.2018
(51) Int. Cl.: A23B 4/048

(54) **METHOD FOR MAKING GRILL-TYPE SMOKED FOOD INGREDIENTS**

(71) Applicant: Puresmoke Limited, Arundel, West Sussex BN18 0HY (GB)
(72) Inventor: The designation of the inventor has not yet been filed
(74) Representative: Schlich, George

(57) **Abstract**

A method for making an oil-based food ingredient, having grill flavour properties, comprises:
combusting at a temperature of from 200 to 380 degrees C, in the presence of oxygen, a mixture of (i) 2 - 15 parts by weight smoke source and (ii) 1 part by weight flavour source, to generate smoke; and
combining the smoke with an oil-based carrier, yielding the food ingredient, wherein the flavour source comprises a lipid having an oleic acid content (whether free or esterified) of 20% or higher.

## Description

### Introduction

The present invention relates to methods for making grill-type smoked food ingredients, and in particular to methods of making a replacement for existing grill flavourings used by the food industry.

### Background

In general, flavourings are substances used to impart taste and/or smell to food. Flavourings have a long history of safe use in a wide variety of foods, from confectionery and soft drinks to cereals, cakes and yoghurts. They are used in comparatively small amounts so that consumer exposure is relatively low.

Flavourings and food ingredients that mimic or evoke grilled foods are popular in the food industry, for inclusion in a wide range of products, and are referred to generally as "grill flavour" or similar.

Grill-type flavours are known from pyrolysis reactions disclosed in US 4,876,108 and 4,994,297 (to Underwood). The food flavouring disclosed in US 4,994,297 comprises liquid smoke, obtained from the pyrolysis of wood or cellulose feed stocks, using the method disclosed in U 4,876,108, to produce a flavouring that is related, but quite distinct from the grill-type food ingredients described herein.

A more recent, known grill flavouring is described in US 5,952,029 and EP0867122, obtained by heating a spray or atomized droplets of a saturated or partially saturated vegetable oil to a temperature of at least 480° C in an oxygen starved atmosphere in a fast pyrolysis reactor. Specific commercial grill flavours include Grill Flavor® L2558, manufactured by Kraft Food Ingredients Corporation of Memphis, Tennessee, USA and Grillin' 5078 available from Red Arrow International LLC, Manitowoc, Wisconsin, USA.

European Union (EU) legislation defines different types of flavourings, such as natural flavourings and smoke flavourings, and in Europe, the manufacture and use of flavourings is governed e.g. by Regulation (EC) No.s 1331/2008 and 1334/2008 on flavourings and certain food ingredients with flavouring properties for use in and on foods. Known commercial grill flavours made by pyrolysis methods are believed to fall outside this legislation, i.e. are not regarded as safe and/or are not regarded as natural food products. Specifically, the safety of Grillin' 5078, mentioned above, can not be established.

Deep frying fats have also been identified as sources of toxic products as e.g. polycyclic aromatic hydrocarbons (PAHs) may be formed during pyrolysis of fats at temperatures above 400°C. Consequently, deep-frying fats subjected to repeated use have been identified as providing the conditions most conducive to the generation of high levels of toxic products (see: International Food Safety Handbook: Science, International Regulation, Control, July 16, 1999 by CRC Press, ISBN 9780824793548 - CAT# DK5118).

### Aim of the Invention

An aim of the invention is to provide alternative products that mimic or evoke grill flavour and can be used as such in foods, preferably complying with the relevant food safety legislation. A further aim is to ameliorate and/or overcome difficulties identified in known grill flavourings and similar ingredients. A further aim of preferred embodiments is to provide an improved grill-type food ingredient with grill flavour characteristics.

### Summary of the Invention

The invention provides methods of making flavoured foods and food ingredients, by combustion of lipid and capture of volatiles from combusted lipid.

Accordingly, the invention provides a method of flavouring a carrier to make a food ingredient, comprising:
combusting a mixture of (i) smoke source and (ii) flavour source, to generate smoke; and
combining the smoke with the carrier, yielding the food ingredient,
wherein the flavour source comprises a lipid.

The methods impart flavour to the carrier, and preferred carriers are oils having a high saturated fat content and preferred flavour sources are lipids with high oleic acid content, this combination giving a grill flavour.

### Details of the Invention

The methods yield food ingredients that can be used to impart a grill character to foods. A combination of smoke from combustion material (fuel) with combusted flavour source is captured in the carrier, yielding the grill-type food ingredient and leaving behind non-volatile components that would otherwise contaminate the food ingredient. Specific examples recited below set out particular food ingredients that have been obtained from sunflower oil and lard.

### Combustion material

In general, the fuel for the source of the smoke is not limited, provided that the smoke is regarded as useable for smoking food for human consumption, and hence for making food ingredients, e.g. oil- or water- based. Smoke is typically generated from a combustion material or fuel provided in a form that is relatively dry and can be combusted to generate heat to combust the flavour source and to yield smoke to generate contributing smoke flavour. Preferred fuel is in particulate form, and this assists in providing intimately combined mixtures of different materials, and preferred materials for generating smoke are: wood chips, wood dust, wood shavings, wood briquettes, logs, smoke-free solid fuel, charcoal and charcoal briquettes. In generating smoke for the invention, we have successfully used oak, hickory, cherry, apple, beech wood, maple, manuka, pine, spruce, whiskey oak and woodland sage. Other suitable woods and other smoke sources include alder, barley, malted barley, black walnut, red oak, honey oak, walnut, cedar, chestnut, corn cobb, maple, mesquite, mulberry, orange, pear, pecan, plum, and sandalwood and also mixtures thereof. Other sources of smoke apart from wood include herbs, tea, botanicals and botanical oils (optionally to provide additional flavour in combination with one or more other principal flavour / smoke sources).

It is desirable to provide the grill-type flavour as a main flavour and even as substantially the only flavour. Preferably, the combustion material includes some material that generates heat for burning of the flavour source with only a little smoke production, allowing the grill flavour to dominate. Preferably the combustion material comprises a relative smoke-free fuel, preferably charcoal or similar. This can be used alone or in combination with relative smoke-generating material.

### Mixtures of smoke-free and smoke-generating fuel

In preferred methods of the invention, illustrated in examples below, a mixture of smoke-free and smoke-generating fuels is used, preferably in a ratio of from 20:1 to 1:20, more preferably 10:1 to 1:10 and more preferably 3:1 to 1:3. In specific examples a ratio of approximately 1:1 was used, referring to these 2 constituents only. Other constituents such as filters may be present, and the flavour source is also present.

The smoke-free fuel preferably is or comprises charcoal.

The smoke-generating fuel preferably is or comprises wood.

### Filter Material

Preferably the smoke source comprises a filter and the methods comprise filtering the smoke to reduce its PAH content, e.g. treating the smoke to selectively remove therefrom one or more PAHs that contain 4 or more benzene rings. In further preferred embodiments, the subject of examples below, filtration is applied to selectively remove benzo(a)pyrene, benz(a)anthracene, chrysene and/or dibenz(a,h)anthracene from the smoke.

Smoke can be filtered by generating smoke in the presence of filter material and/or passing smoke through a filter. Suitably, fuel and filter material are both present in the chamber that provides the smoke source, and fuel is combusted in the presence of the filter, being intimately mixed therewith. This approach was used in the examples below. Substantially homogenous mixtures are preferred where more than one component is present.

Thus, in preferred methods herein, the treating comprises removing one or more PAHs from the smoke using a filter. For example, the level of PAH is reduced by passing the smoke through a filter or directly contacting fuel with the filter.

The filter may be a natural or synthetic porous mineral. In particular, the mineral may be a zeolite. In a particularly preferred embodiment, the zeolite is clinoptilolite. Typically, for a filter separate from the fuel, filter material in the form of powder or granules is packed into and retained in or on a filter holder such as a box or column. In preparation of filters for use in the invention, the filter material may also be combined with other components, e.g. with support material, and/or with sand or iron salts.

Suitable filters remove from the smoke PAHs containing 4, 5 or more benzene rings, thus removing PAHs such as pyrene, benz(a)anthracene, naphthacene, chrysene, benzo(a)pyrene and dibenz(a,h)anthracene. Other suitable filters also remove PAHs containing 3 or more rings, thus removing PAHs such as anthracene, phenanthrene and 2-methyl anthracene.

Still further suitable filters may be used to also remove PAHs having just 2 rings. As will be appreciated, PAH size is related to but not directly proportional to the number of rings and a size exclusion filter that removes PAHs having 2 rings will also remove larger PAHs e.g. having 3, 4, 5 or more rings.

Pre-treatment of the filter may be employed to modify and preferably improve its properties and/or activity. The filter can be pre-treated by soaking in mild acid, preferably containing ammonium ions, suitably ammonium chloride. For example, the filter may be soaked in approximately 1 molar ammonium chloride, for instance for approximately 24 hours prior to use. Generally, the filter is dried prior to use.

A separate, also optional, though related step is to treat the filter by ion exchange so as to exchange sodium and/or calcium ions, e.g. in the zeolite, preferably clinoptilolite, with lithium, potassium or preferably ammonium ions. The filter can be treated with KOH, KCI, LiOH, LiCI or ammonium ions for this purpose, e.g. using ammonium chloride as described above and in more detail in specific embodiments below. Again, the filter material is generally dried prior to use.

A further separate, also optional but preferred, step is to heat the zeolite filters prior to or during use. Heat treatment assists filter performance, it is believed by opening channels in the filter material e.g. by removing water, and can be for an hour or more, a few hours or up to about 12 hours. Preferred embodiments of the invention comprises pre-treating the filter by heating or baking at 150°C or higher, preferably 200°C or higher, typically at around 270°C or more. Baking / heating activates the filter in that it is better able to remove PAHs from smoke. The filter may also be baked / heated between batches of smoke treatment to re-activate the filter.

Suitably, the methods comprise filtering the smoke selectively to remove one or more PAHs that contain 3 or more benzene rings. Preferably, the methods comprise filtering the smoke selectively to remove one or more PAHs that contain 4 or more benzene rings. Typically, the method removes a plurality of the PAH compounds and in specific embodiments of the invention removal of substantially all of a large number of PAHs has been achieved. In embodiments of the invention, the one or more PAHs are selected from benzo(a)pyrene, benz(a)anthracene, benzo(b)fluoranthene, benzo(j)fluoranthene, benzo(k)fluoranthene, benzo(g,h,i)perylene, chrysene, cyclopenta(c,d)pyrene, dibenz(a,h)anthracene, dibenzo(a,e)pyrene, dibenzo(a,h)pyrene, dibenzo(a,i)pyrene, dibenzo(a,l)pyrene, indeno(1,2,3-cd)pyrene, benzo-(c)-fluorene or 5-methylchrysene. The method removes significant quantities of one or more of the PAHs, and preferably removes significant quantities of a plurality of the PAHs. In specific examples, described below, particular PAHs known to be carcinogenic are substantially removed but the smokey flavour is substantially unimpaired. Methods of the invention may thus comprise selectively removing the PAHs benzo(a)pyrene, benz(a)anthracene, dibenz(a,h)anthracene, two of those PAHs or all three. In particularly preferred embodiments, the method reduces the level of at least benzo(a)pyrene and/or benz(a)anthracene.

### Presence of filter material

In preferred methods, therefore, the smoke source (or combustion material) comprises a filter as described above. When present the filter is generally present in an amount of from 1 to 50% by weight of the total of flavour source plus smoke source (hence, for 9000g wood dust plus charcoal dust and 180g sunflower oil the filter is added at from 92g to 4600g). The filter is preferably present in an amount of from 2 to 30%, more preferably 2 to 20%, more preferably 3 to 15% by weight of that total.

### Flavour Source

To generate grill-type flavour in the food ingredient, the flavour source used is or comprises a lipid and preferably one that comprises oleic acid, meaning either as free fatty acid or esterified (e.g. in fat). Preferably, the lipid is selected from animal fats and oils, again preferably ones known to have oleic acid contents and especially relatively high oleic acid content, meaning 10% or above, more preferably 20% or above (% = proportion of total fatty acid esters; Orsavova et al, Int. J. Mol. Sci 2015, 16, 12871-12809).

Preferred animal fats are selected from pig fat (lard), beef fat (tallow), mutton fat (tallow), bacon dripping, chicken fat, turkey fat and mixtures thereof.

Preferred oils are high oleic acid content oils. More generally, preferred oils are selected from olive oil, pecan oil, canola oil, peanut oil, macadamia oil, sunflower oil, grape seed oil, sea buckthorn oil, sesame oil, poppyseed oil, safflower oil, pumpkin seed oil, rice bran oil, almond oil, rapeseed oil and mixtures thereof.

Other lipids may also be used to generate other characteristic smoked food ingredients such as roast, charred, toasted and burnt, and so oleic acid content may not be of such importance for variant flavours made according to the invention

### Carrier

Methods of the invention are for making food ingredients. The carrier can hence be any suitable for the food industry. Solid carrier can be used, preferably in finely granulated or powder form, and also preferably in dry form. Materials suitable for the food industry includes saccharides, polysaccharides and starches, with maltodextrin as an example. Other powdered, finely divided food additives / ingredients may be used, e.g. silicas. Especially suitable are also salt, sugar and/or spices. The carrier is suitably a liquid carrier. Oil- and water-based carriers are preferred, depending upon the ultimate use for the food ingredients. Water is a preferred carrier. Oils and mixtures of oils are also preferred.

Long shelf life is desirable in food and food ingredients; to that end dry solid carriers in powder form are preferred and also stable oils are preferred, and usually these latter are relatively low in polyunsaturated and monounsaturated fats / fatty acids and high in saturated fats / fatty acids. Preferably the oils have a low level of oxidation.

Suitable carrier oils for the present invention include high stability vegetable oils, that is to say, saturated, or partially saturated vegetable oils. Preferred oils include saturated or partially saturated palm oil, soya oil, peanut oil, canola, corn oil, coconut oil, animal fats, beef tallow and butter.

More specifically, the carrier is preferably an oil having a high saturated fat content: high saturated fatty acid levels give improved stability. Known saturated fat levels are approximately: coconut: 86 - 92% saturated; butter: 50 - 68% saturated; lard - 39% saturated; olive oil: 14% saturated; and sesame: 14% saturated. High levels are 10% and above, preferably 30% and above. All these oils can also be used as the or a part of the flavour source. Also specifically, the quality of sunflower oil may be assessed on the basis of the ratio oleic:linoleic acid. Commonly, the fatty acid composition in sunflower oil is: 55-65% of linoleic acid, 20-30% of oleic acid, and the remainder including other fatty acids, primarily palmitic and stearic. Sunflower oil is regarded as a stable oil, and most versions are useful in the invention. Particular versions used in the invention preferably contain even higher oleic acid levels, i.e. at least 50% oleic acid, more preferably at least 60% and more preferably still at least 70%. A known high oleic acid sunflower oil has about 82% oleic acid.

Oils with lower levels of saturates and which are generally less useful as stable carrier oils, but which may be acceptable if stability if less of a required feature, include avocado, fish, flax and [some] nut (including peanut) oils.

As particular examples of preferred stable carrier oils are included: oils with a high oleic acid content, such as sunflower oil, lard, tallow and olive oil, and oils with a saturated fatty acid content of 20% and higher, more preferably 35% and higher.

Combination of the smoke and the carrier is conventional and can be carried out using known smoking equipment. Generally, for combination of smoke into oil the process is carried out gently so as not to adversely affect the oil e.g. by oxidation. More aggressive agitation is possible when smoking into water-based carriers. Powders can be combined with smoke on trays passively as is known in this field.

### Mixture of Flavour Source and Smoke Source

In the combusting mixture, both flavour source and smoke source (fuel, combustion material) are included. There is enough fuel for the temperature to rise such that the flavour, e.g. oleic acid-containing lipid, is combusted, releasing volatiles that are captured in the carrier. We have found good results at relatively small scale using first approximately a 1:50 and then approximately a 1:20 weight ratio of flavour to fuel. This ratio can be varied provided there is heat sufficient to burn the flavour and the mixture is otherwise suitable to combust in a controlled matter in a smoking chamber / furnace e.g. as described in the examples below. A probe is recommended to monitor the temperature so that by agitation and/or varying the air input the combustion proceeds within desired parameters. A ratio of flavour:fuel from about 1:5 upwards and/or up to about 1:200 can be tolerated, preferably 1:10 or more, preferably up to about 1:100 or 1:150. With too much flavour source, given this is generally in liquid / fat form, initiating combustion can be more difficult and it may be necessary to start with less flavour and introduce this during combustion e.g. by dripping flavour onto the combusting mass. Having insufficient flavour makes the process less efficient and pushes the overall flavour towards a smoke flavour whereas preferred characteristics of the invention are predominantly of the grill-type.

### Temperature

Generation of heat in the presence of oxygen (usually from air supplied to the combustion chamber) enables combustion of the flavour source. Preferably the temperature is controlled so as not to reach 400 degrees C, though the heat should be high enough to burn the e.g. lipid and produce volatiles to be captured in the carrier. The minimum temperature is generally at least 200 degrees C, preferably at least 300 degrees C. Also preferably the temperate is 390 degrees C or less, more preferably 380 degrees C or less. In specific examples the temperature used was maintained in the range 320 - 380 degrees C during flavour generation.

In particular embodiments of the invention, there are provided:
a method as described herein, wherein the combustion material comprises:
   (1) 1 - 20 parts by weight smoke-free fuel, e.g. charcoal; and
   (2) 20 - 1 part by weight smoke generating fuel, e.g. wood; and
   (3) optionally, 2 - 30% by weight of the total of (1) + (2) filter material,
a method as described herein wherein the mixture comprises from 1:10 to 1:150 flavour source: smoke source (combustion material) by weight,
a method as described herein for making an oil-based food ingredient, comprising:
   combusting at a temperature of from 200 to 380 degrees C, in the presence of oxygen, a mixture of (i) 5 - 150 parts by weight smoke source and (ii) 1 part by weight flavour source, to generate smoke; and
   combining the smoke with an oil-based carrier, yielding the food ingredient,
   wherein the flavour source comprises a lipid having an oleic acid content (whether free or esterified) of 20% or higher, and
a method as described herein, wherein the smoke source comprises a substantially homogenous mixture of wood dust: charcoal dust at a ratio of 1 - 3 : 3 - 1 and wherein the flavour source comprises sunflower oil or lard or tallow and the carrier comprises sunflower oil.

In specific embodiments of the invention there are provided methods as described herein for making oil-based food ingredients, comprising:
combusting a flavour source at a temperature of from 320 to 380 degrees C, in the presence of oxygen, in a substantially homogenous mixture of approximately (i) 1 part by weight charcoal dust and (ii) 1 part by weight wood dust, to generate smoke; and
combining the smoke with an oil-based carrier, yielding the food ingredient,
wherein the flavour source comprises a lipid having an oleic acid content (whether free or esterified) of 20% or higher.

In further specific embodiments, illustrated in examples, the flavour source comprises sunflower oil or lard or tallow and the carrier comprises sunflower oil.

The invention further provides the food ingredients obtainable and obtained according to all methods of the invention.

### Advantages

An advantage of the invention is that the products obtained are and may be classified as natural smoked products and foods / food ingredients. They are not artificial flavourings.

Identifiable and non-identifiable components of the non-volatile fraction of known grill flavours are almost entirely omitted from the ingredients made by the invention as a result of their manner of manufacture, namely by capturing volatile components from burning of the source combustion material.

Processes of the invention are easily scalable and the processes are easily adaptable for different flavour source materials and different combinations of such materials. The processes allow capture of the new grill flavour in different media, e.g. water- and oil-based and also in foods such as salt, sugar etc. The processes are akin to smoking processes and can be used and adapted accordingly.

The processes allow other components to be included in the combusting mix, e.g. filters to reduce PAH content in the end ingredient and other optional minor flavour components.

The invention avoids the dangerous pyrolysis methods of the known methods for making "grill flavour".

The processes can produce, as evidenced in examples below, a savoury fatty flavour, with mild smokiness, described by some as better than grill flavour(s), and intended as a replacement for the known, and toxic, pyrolysis-derived grill flavours, for use in imparting grill flavour or grill-type flavour to foods.

The invention is now described in specific examples with reference to the accompanying drawings in which:
Fig. 1 shows a schematic diagram of apparatus for making flavoured oil; and

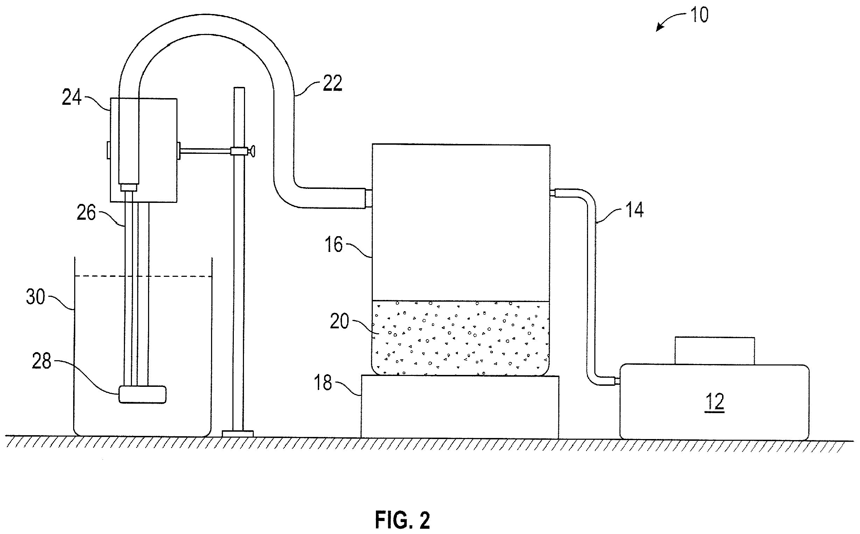

Fig. 2 shows a schematic diagram of apparatus for making flavoured water.

### Examples

### Example 1 - Preparation Of Flavoured Oil

A grill flavour was prepared by combustion of high oleic acid sunflower oil (smoke point - 323°C, flash point - 315°C, fire point - 371°C).

### Materials

Charcoal dust (particle size up to approx. 1 mm) - 4500g
Oak sawdust - 4500 g
Combustion oil: High Oleic Sunflower Oil -180 g
Carrier oil: High Oleic Sunflower Oil - 2 L

### Apparatus

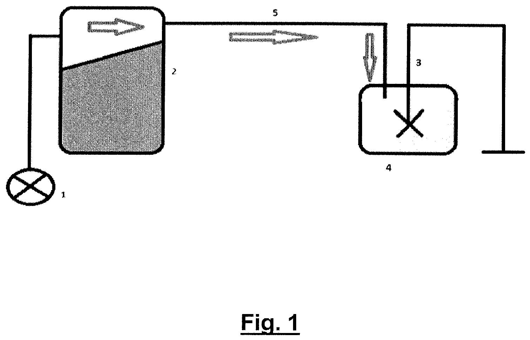

Combustion apparatus, shown schematically in fig. 1 was made up of a smoke furnace 2 into which air was pumped from fan 1. Smoke exiting the chamber passed via silicon tube 5 into mixing vessel 4 with continuous agitation by low-shear mixer 3.

### Method

The 4500 g of charcoal and 4500 g of oak sawdust were weighed and mixed thoroughly to produce a homogenous blend. The blend was transferred into the smoke furnace. Two litres of high oleic sunflower oil were measured and transferred in the mixer vessel. The smoke furnace and the mixing vessel were connected using a silicon pipe. Afterwards, a small amount of hot ash was added to the wood-charcoal blend to start the smoking process. An air fan was connected to the furnace to control the air supply to the burning mix.

The air supply was regulated using a probe targeted at the centre of the combustion mass so that the temperature of the burning mix was maintained at about 320 - 380 degrees and did not reach 400°C. A total of 180 g of the same high oleic sunflower oil was added in small amounts, at regular intervals to the wood-charcoal blend during burning. The wood blend was stirred at regular intervals to promote the production of smoke. This agitation also helped to keep the temperature in the desired range, and to avoid it reaching 400°C.

The evolved smoke was continuously passed into carrier oil, with constant gentle mixing thereof, for 21 hours. The flavoured oil was tested and found to have a pleasant grill-type flavour. Testing for consumer reaction and comparison with known grill flavours is planned.

### Example 2 - Preparation Of Flavoured Oil

A grill flavour was prepared by combustion of beef dripping.

### Materials

Charcoal dust (particle size up to approx. 1 mm) - 4500g
Oak sawdust - 4500 g
Combustion oil: Beef dripping -180 g
Carrier oil: High Oleic Sunflower Oil - 2 L

### Apparatus and Method

The procedure was repeated as for, and using the apparatus of, Example 1 and fig. 1 using the different combustion oil - in this case beef dripping.

After the same period of continuous smoking, the carrier oil was tested and also found to have a pleasant grill-type flavour. Similarly detailed testing of this oil is planned.

### Example 3 - Preparation Of Flavoured Water

We used a water smoker 10 for preparation of flavoured water from oil and dripping (as per Examples 1 and 2 above).

A compressor 12 was linked by pipe 14 to airtight smoke chamber (approx. 100 litres) 16, containing combustible material 20 (4500g oak dust plus 4500g charcoal dust plus 900g clinoptilolite and then 450g sunflower oil (run 1) or beef dripping (run 2)).

The chamber smoke output was in turn linked to the stator portion of mixing head 28 of a YTRON® Y-ByPass mixer 24 via silicone rubber linking tube 22 and bypass pipe 26. The mixer is approximately 0.6m tall with a power of 4.5KW. The mixing head 28 is submerged during operation in water in a circular cross-section water pan (approx. 15 litres) 30.

Calibration had been carried out based on smoking of water with various mixtures of wood dust and clinoptilolite, as a result of which the apparatus was set with the parameters: air was flowed into the smoke chamber 16 at approximately 127 litres per minute. Combustion material was placed in the bottom of the chamber as a single batch and electrical heat source 18 was switched on to ignite the dust, producing smoke. The air flow directed smoke to the mixing head via the linking tube and the bypass pipe. The mixer was turned on and also exerted a low level of suction, thus drawing smoke down the bypass pipe and into the water in the pan. The bypass pipe exit was of diameter approx. 25mm and was located approximately 6mm above the spinning impellers (set to approx. 60 Hz) of the mixer inside the mixing head, delivering the chamber output smoke right into the centre of the mixing; as the impellers span the smoke was intimately homogenised into tiny bubbles at the centre of the mixing head, with frothing seen at and around the head and at the water surface. Tiny bubbles were also seen dispersed throughout the water, swirling in the mixed water, having long residence times before rising to the surface. The few bubbles of smoke passing through the solution escaped into the atmosphere directly.

Flavouring of the water was continued for 6 hours, to a pH of approx. 4 in the water and then the compressor and mixer switched off and the remaining dust left to extinguish by cutting off the air supply.

Both runs produced water with recognisable grill flavour qualities and comparable with industry-standard "grill flavour". In initial testing, some tasters described the ingredient as having a "savoury fatty flavour, with mild smokiness, better than grill flavour(s)".

### Parts List for Apparatus

- 1: fan
- 2: smoke furnace
- 3: mixer
- 4: mixing vessel
- 5: silicon tube
- 10: water flavouring apparatus
- 12: compressor
- 14: connection pipe
- 16: smoking chamber
- 18: heat source
- 20: combustible material
- 22: connection tube
- 24: homogeniser
- 26: bypass pipe
- 28: mixing head
- 30: water pan

The invention thus provides methods of preparing food ingredients, and the food ingredients thus produced

## Claims

1. A method of making a food ingredient, comprising:
combusting a mixture of (i) smoke source and (ii) flavour source, to generate smoke; and
combining the smoke with a carrier, yielding the food ingredient,
wherein the flavour source comprises a lipid.

2. A method according to claim 1, wherein the carrier is a liquid carrier.

3. A method according to claim 2, wherein the carrier is an oil, preferably one having a having a high saturated fat content.

4. A method according to any preceding claim, wherein the flavour source is a lipid that contains oleic acid.

5. A method according to claim 4 wherein the lipid contains 10% or more oleic acid, preferably 20% or more oleic acid.

6. A method according to claim 4 or 5, wherein the lipid is selected from animal fats and oils.

7. A method according to claim 6, wherein the animal fat is selected from pig fat (lard), beef fat (tallow), mutton fat (tallow), bacon dripping, chicken fat, turkey fat and mixtures thereof.

8. A method according to claim 6, wherein the oil is selected from high oleic acid content oils, olive oil, pecan oil, canola oil, peanut oil, macadamia oil, sunflower oil, grape seed oil, sea buckthorn oil, sesame oil, poppyseed oil, safflower oil, pumpkin seed oil, rice bran oio, almond oil, rapeseed oil and mixtures thereof.

9. A method according to any preceding claim comprising combusting the mixture in the presence of oxygen.

10. A method according to any preceding claim, wherein the smoke source comprises combustion material selected from:
(1) wood chips, wood dust, wood shavings, wood briquettes, logs, smoke-free solid fuel, charcoal and charcoal briquettes; and
(2) mixtures of two or more of (1); and
(3) optionally, filter material that selectively reduces the PAH content of the smoke, e.g. by selectively remove therefrom one or more PAHs that contain 4 or more benzene rings.

11. A method according to claim 10, wherein the combustion material comprises:
(1) 1 - 20 parts by weight smoke-free fuel, e.g. charcoal; and
(2) 20 - 1 part by weight smoke generating fuel, e.g. wood; and
(3) optionally, 2 - 30% by weight of the total of (1) + (2) filter material.

12. A method according to any preceding claim wherein the mixture comprises from 1:10 to 1:150 flavour source: smoke source (combustion material) by weight.

13. A method according to any preceding claim for making an oil-based food ingredient, comprising:
combusting at a temperature of from 200 to 380 degrees C, in the presence of oxygen, a mixture of (i) 5 - 150 parts by weight smoke source and (ii) 1 part by weight flavour source, to generate smoke; and
combining the smoke with an oil-based carrier, yielding the food ingredient,
wherein the flavour source comprises a lipid having an oleic acid content (whether free or esterified) of 20% or higher.

14. A method according to claim 13, wherein the smoke source comprises a substantially homogenous mixture of wood dust: charcoal dust at a ratio of 1 - 3 : 3 - 1 and wherein the flavour source comprises sunflower oil or lard or tallow and the carrier comprises sunflower oil.

15. A grill flavoured food ingredient obtainable according to claim 13 or 14.
